# EUROPEAN PATENT SPECIFICATION

(11) **EP 3 748 474 B1**
(45) Date of publication and mention of the grant of the patent: **28.09.2022**
(21) Application number: 19178747.2
(22) Date of filing: 06.06.2019
(51) Int. Cl.: G06F 3/01, G06F 3/16, H04R 1/24, H04R 3/04

(54) **AUDIO-HAPTIC PROCESSOR, METHOD, SYSTEM AND COMPUTER PROGRAM PRODUCT**
AUDIO-HAPTIK PROZESSOR, VERFAHREN, SYSTEM AND COMPUTER PROGRAM PRODUKT
PROCESSEUR, MÉTHODE, SYSTÈME ET PRODUIT DE PROGRAMME AUDIO-HAPTIQUE

(43) Date of publication of application: 09.12.2020
(73) Proprietor: Goodix Technology (HK) Company Limited, Hong Kong (CN)
(72) Inventor: Gautama, Temujin, Redhill, Surrey RH1 1QZ (GB); Macours, Christophe Marc, Redhill, Surrey RH1 1QZ (GB)
(74) Representative: González Peces, Gustavo Adolfo

(56) References cited:
- EP-A1- 3 157 266
- EP-A1- 3 244 628
- EP-A1- 3 321 933
- US-B1- 6 809 635

## Description

### FIELD

This disclosure relates to an audio-haptic processor , an audio-haptic system , and corresponding method and computer program product.

### BACKGROUND

Mobile devices such as mobile phones use haptic feedback for example in vibrate or silent mode. A further application of haptic technology is to emulate physical buttons without moving mechanical components. A 'virtual button' system typically consists of a touch interface for example a touchscreen or a touch sensor, in combination with one or more actuators. It has been shown that cross-modality helps in making the virtual button experience more realistic, and therefore, having both a haptic and an audio response to a touch event is often desired in such systems. In typical systems, the audio-haptic response is generated by two actuators: one for the audio typically a loudspeaker or piezoelectric diaphragm and one for the haptics typically using an eccentric rotating mass actuator (ERM) or a linear resonant actuator (LRA). Each actuator is driven by a respective amplifier circuit.

An eccentric rotating mass (ERM) actuator is typically used for generating vibration alerts that consist of long stationary excitations in the order of 0.5 seconds. The ERM is driven by a positive DC level that remains constant for the larger part of the vibration. Optionally, the first part may consist of a higher DC voltage to obtain the steady-state rotational speed and acceleration faster than when using the nominal level which may be referred to as boosting, and the final part may consist of a negative DC level to minimise the time required to stop the vibration which may be referred to as braking.

An ERM can also be used for generating a virtual click by applying a positive DC voltage for a short period of time typically in the order of 10-30 milliseconds, possibly followed by a braking period. The DC level determines the stationary rotational frequency and acceleration after start-up. For the generation of a virtual click, the excitation signal is a trade-off between strength and crispness. If the duration of the DC level is increased, the resulting response may be stronger, but the perceived click may be less crisp. The quality of the virtual click can be considerably improved by adding an auditive component, for example by adding the sound that would be produced by a mechanical switch. Such a sound is generated by a loudspeaker driven by an additional amplifier.

EP3244628 A1 discloses an audio processing entity comprising a frequency band decomposition entity, a first sub-band processing entity, a second sub-band processing entity, a third sub-band processing entity , and a frequency band composition entity. Each of three frequency sub-bands are extracted from the input audio signal and provided for processing by the respective one of the first, second and third sub-band processing entities. Respective output signals from the three sub-band processing entities and decomposed into composite audio signal by the frequency band composition entity', which composite audio signal serves as the output audio signal from the audio processing entity. As an example of using three frequency sub-bands, the frequency band is divided into three frequency sub-bands. The three frequency sub-bands may comprise a tactile band (e.g. an infra-sound band) from 5 to 50 Hz, the audiotactile band from 50 to 500 (or 1000) Hz, and an audio band from 500 (or 1000) to 20 kHz. In one example, the first sub-band processing entity may process the audio band signal, the second sub-band processing entity 115 may process the audiotactile band signal, and the third sub-band processing entity 116' may process the tactile band signal. Processing rules may be applied in a processing entity that processes the lowermost frequency sub-band under consideration by the audio processing entity (e.g. the tactile band). This processing entity may comprise e.g. the tactile band processing entity of the audio processing entity or the third sub-band processing entity of the audio processing entity. In one scenario the magnitude of the tactile band signal is increased in order to ensure sufficient tactile effect to complement the audible signal component for enhanced perception of sound. In another scenario, the amplitude of the tactile band signal is limited in order to ensure avoiding discomfort to the listener due to excessive vibration intensity.

EP3157266A1 discloses a controller for a haptic feedback element, the haptic feedback element being configured to generate haptic vibrations, wherein the controller comprises a sense input and is configured to sense a signal induced on at least one terminal of the haptic feedback element in response to an external vibration source. The controller may sense vibrations induced one or more terminals of a haptic feedback element. The external vibration source may for example be due to speech transmitted via bone conduction which can be detected and subsequently processed.

US6809635B1 discloses a mobile terminal includes a vibration motor which provides a silent vibration alert to a user of the mobile terminal during reception of incoming communications which include audio communications; and an amplifier the amplifier amplifying the audio communications and producing an amplified audio output coupled to at least the vibration motor which outputs the audio communications as audible sound.

EP3321933A1 discloses a linear resonant actuator controller for a mobile device having a linear resonant actuator. The linear resonant actuator controller comprises a controller output configured to be coupled to a linear resonant actuator; an audio processor having an audio processor input and an audio processor output coupled to the controller output. The audio processor is configured to receive an audio signal comprising speech, to process the audio signal by attenuating the audio signal frequency components at the resonant frequency of the linear resonant actuator with respect to at least some other audio signal frequency components, and to output the processed audio signal on the audio processor output.

### SUMMARY

The invention is set out in the appended set of claims.

### BRIEF DESCRIPTION OF THE DRAWINGS

In the figures and description like reference numerals refer to like features. In the accompanying drawings :
Figure 1 shows an audio-haptic processor according to an example not falling under the scope of the claims.
Figure 2 illustrates an audio-haptic system including an audio-haptic processor according to an embodiment.
Figure 3 shows an audio-haptic system including an audio-haptic processor according to an example not forming part of the invention.
Figure 4 illustrates an example haptic signal for an ERM in the time domain and the frequency domain.
Figure 5 shows an example acoustic transfer function of a piezo-electric actuator.
Figure 6 shows an example acoustic transfer function of a loudspeaker.
Figure 7 shows a method of audio-haptic processing .

### DETAILED DESCRIPTION

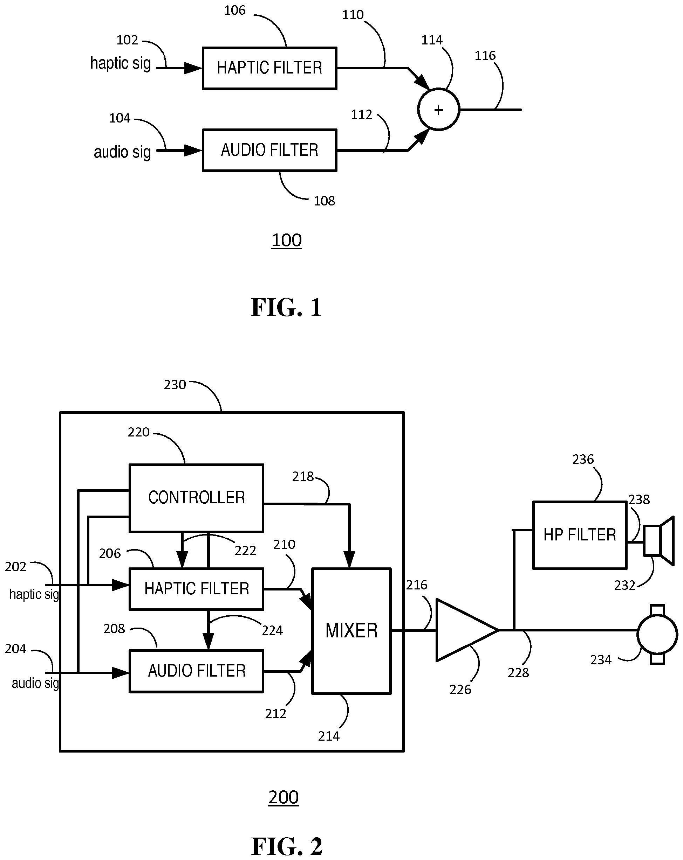

Figure 1 shows an audio-haptic processor 100 for processing audio and haptic signals. The audio-haptic processor 100 has a haptic input 102 which may be connected to an input of a haptic filter 106. The haptic filter output 110 may be connected to a first input of mixer 114. An audio input 104 may be connected to an input of an audio filter 108. The audio filter output 112 may be connected to a second input of the mixer 114. The output of the mixer 114 may be connected to the audio-haptic processor output 116. The haptic filter 106 has a filter pass-band in a first frequency range. The audio filter 108 has a filter pass band in a second frequency range. The second frequency range comprises frequencies higher than frequencies in the first frequency range. In some examples, the first frequency range may include frequencies less than 800 Hz. In some examples the second frequency range may include frequencies above 1 kHz.

In operation of the audio-haptic processor 100, the audio-haptic processor output 116 may be connected to an amplifier (not shown) which has an output connected to a parallel arrangement of at least one audio actuator (not shown), such as for example a loudspeaker or piezo actuator, together with a haptic actuator (not shown) such as an LRA or ERM. An audio signal is received on the audio input 104 and filtered by the audio filter. A haptic signal is received on the haptic input 102 and filtered by the haptic filter 106. The filtered haptic signal and the filtered audio signal may be mixed by the mixer 114. The combined audio-haptic signal may then be output on the audio-haptic processor output 116. The audio-haptic signal is then received by the amplifier (not shown) which drives a parallel arrangement of at least one audio actuator (not shown) together with a haptic actuator (not shown).

The inventors of the present disclosure have appreciated that because haptic actuators typically have a frequency response at the lower end of the audio frequency spectrum for example below 800 Hz, or in the case of ERM actuators are driven at DC levels, by applying filters with appropriate pass bands to the audio signal and the haptic signal before combining them, a single amplifier may be used to drive one or more audio actuators and one or more haptic actuators connected in parallel. By appropriately filtering the haptic signal before combining the audio and haptic signals, undesired audible artefacts on the audio actuator, for example high-frequency components due to transients in the haptic signal, may be attenuated. By appropriately filtering the audio signal before combining the audio and haptic signals, undesired excitation of the haptic actuator by for example strong bass components in the audio signal may be lowered. The inventors have further appreciated that using a classical crossover network on the combined audio-haptic signal after the amplifier does not remove or attenuate these undesired artefacts.

The audio-haptic processor 100 may be implemented in hardware, software executable on a microprocessor or digital signal processor, or a combination of hardware and software. In some examples, the audio filter 108 and haptic filter 106 may be configurable with different filter coefficients, so modifying the filter characteristics. This may allow the audio-haptic processor 100 to be adapted to different audio actuators and haptic actuators

The term audio-haptic processor as used in the present disclosure refers to a processor used for processing audio signals primarily intended to provide an audio output together with haptic signals primarily intended to provide haptic feedback.

Figure 2 shows an audio-haptic system 200 including an audio-haptic processor 230, an amplifier 226 which may be a class-D audio amplifier, a high pass filter 236, a loudspeaker 232 and a haptic actuator 234. The audio-haptic processor 230 includes a haptic filter 206, an audio filter 208, a mixer 214 and a controller 220.

The audio-haptic processor 230 has a haptic input 202 which is connected to an input of a haptic filter 206. The haptic filter output 210 is connected to a first input of mixer 214.

An audio input 204 is connected to an input of an audio filter 208. The audio filter output 212 is connected to a second input of the mixer 214. The output of the mixer 214 is connected to the audio-haptic processor output 216. The haptic filter 206 has a filter pass-band in a first frequency range. The audio filter 208 has a filter pass band in a second frequency range. The second frequency range comprises frequencies higher than frequencies in the first frequency range. The controller 220 2. has a first input connected to the haptic input 202 and a second input connected to the audio input 204. A first controller output 222 is connected to the haptic filter 206. A second controller output 224 is connected to the audio filter 208. A third controller output 218 may be connected to the mixer 214.

The audio-haptic processor output 216 may be connected to an input of the amplifier 226. The amplifier output 228 may be connected to a haptic actuator 234. The amplifier output 228 may be connected to an input of a high pass filter 236. The high pass filter output 238 may be connected to the loudspeaker 232.

In operation, an audio signal is received on the audio input 204 and filtered by the audio filter 208. A haptic signal is received on the haptic input 202 and filtered by the haptic filter 206. The filtered haptic signal and the filtered audio signal are mixed by the mixer 214. The combined audio-haptic signal is then output on the audio-haptic processor output 216.

The audio-haptic signal is then received by the amplifier 226 which drives a parallel arrangement of the loudspeaker 232 and the haptic actuator 234. The controller 220 receives the audio signal and haptic signal and may determine the amplitude of the signals. The controller 220 may adapt the characteristics of the haptic filter 206 and the audio filter 208 if at least one of the signal amplitudes and a combination of the signal amplitudes exceeds a predetermined threshold. The adaptation may for example be varying the corner frequency or corner frequencies, which may also be referred to as cut-off frequencies, of either or both the haptic filter 206 and the audio filter 208.

In some examples, the adaptation may include varying the gain of either or both of the haptic filter 206 and the audio filter 208. Alternatively, or in addition the controller 220 may adapt the gain of either or both the filtered audio signal and the filtered haptic signal by controlling the mixing ratio and/or gain of the mixer 214. In some examples the controller output 218 to the mixer 214 may be omitted. The controller 220 adapts the characteristic of the audio filter and of the haptic filter such that the amplitude of the combined audio haptic signal does not exceed a pre-determined threshold. By controlling the amplitude of the audio-haptic signal, a single amplifier may be used to drive multiple actuators in parallel without clipping and may allow a lower power amplifier to be used.

Because haptic actuators typically have a frequency response at the lower end of the audio frequency spectrum for example below 800 Hz, or in the case of ERM actuators are driven by DC levels, by applying filters with appropriate pass bands to the audio signal and the haptic signal before combining them, a single amplifier may be used to drive an audio actuator and a haptic actuator connected in parallel. The high pass filter 236 may reduce or eliminate any audible effect of the haptic signal that may be reproduced by the loudspeaker. In some examples, the high-pass filter 236 may attenuate frequencies below 500 Hz. The high pass filter 236 may be implemented using a capacitor or other passive components such as inductors or resistors. In some examples the high-pass filter 236 may be omitted.

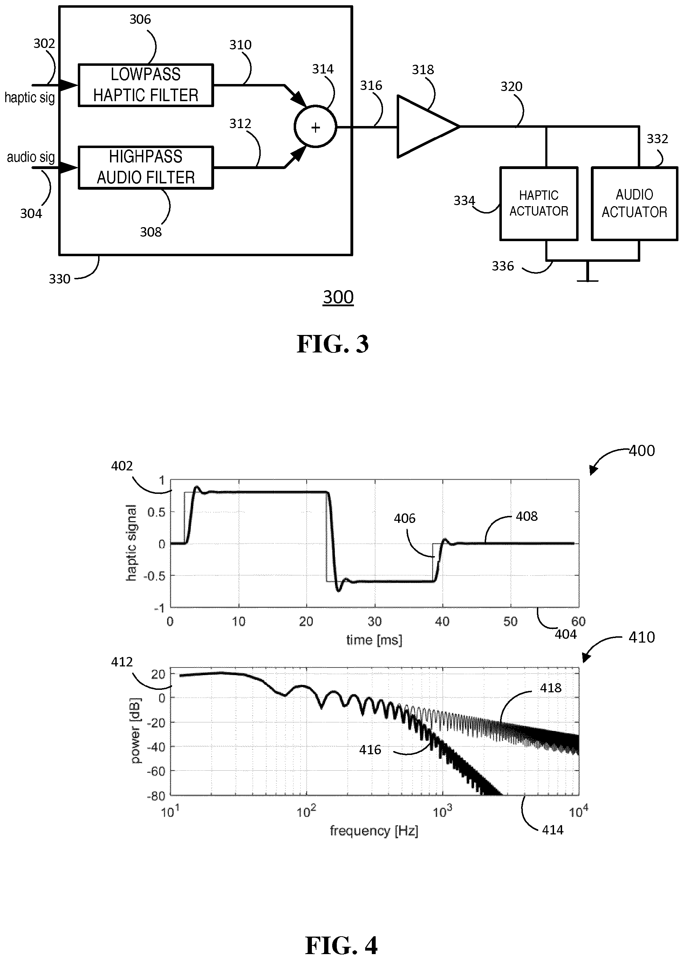

Figure 3 shows an audio-haptic system 300 including an audio-haptic processor 330, an amplifier 318 which may be a class-D audio amplifier, an audio actuator 332 and a haptic actuator 334. The audio-haptic processor 330 includes a haptic filter 306 which is implemented as a low-pass filter, an audio filter 308 which is implemented as a high-pass filter, and a mixer 314.

The audio-haptic processor 330 has a haptic input 302 which may be connected to an input of the haptic filter 306. The haptic filter output 310 may be connected to a first input of mixer 314. An audio input 304 may be connected to an input of the audio filter 308. The audio filter output 312 may be connected to a second input of the mixer 314. The output of the mixer 314 may be connected to the audio-haptic processor output 316. The haptic filter 306 has a filter pass-band in a first frequency range. The audio filter 308 has a filter pass band in a second frequency range. The second frequency range comprises frequencies higher than frequencies in the first frequency range.

The audio-haptic processor output 316 may be connected to an input of the amplifier 318. The amplifier output 320 may be connected to the haptic actuator 334. The amplifier output 320 may be connected to the audio actuator 332. In operation, an audio signal is received on the audio input 304 and filtered by the high-pass audio filter 308. A haptic signal is received on the haptic input 302 and filtered by the low-pass haptic filter 306. The filtered haptic signal and the filtered audio signal may be mixed by the mixer 314. The combined audio-haptic signal may then be output on the audio-haptic processor output 316. The audio-haptic signal is then received by the amplifier 318 which drives a parallel arrangement of the haptic actuator 334 and the audio actuator 332 arranged between the amplifier output 320 and a ground 336. As shown the amplifier 318 drives the haptic actuator 334 and the audio actuator 332 in a single-ended configuration. In other examples, the haptic actuator 334 and audio actuator 332 may be connected to differential outputs of an amplifier.

The haptic actuator 334 may be an ERM for reproducing the haptic part of the combined audio-haptic signal. An ERM is driven by static DC levels and does not react to fast-changing (AC) signals, such as audio. It will therefore only react to the very low frequencies, down to DC, of the combined signal. The haptic signal typically consists of a segment of positive DC for excitation of the ERM, followed by a segment of negative DC for braking the ERM

Figure 4 shows an excitation signal graph in the time domain 400 and the frequency domain for an ERM signal. Time domain excitation graph 400 has normalized signal strength from - 1 to +1 on the y-axis 402 and time in milliseconds from 0 to 60 on the x-axis 404. The unfiltered haptic signal is shown in line 406 and the filtered signal is shown in line 408. The frequency domain excitation signal graph 410 shows power in dB ranging from -80 to +20 dB on the y-axis 412 and the x-axis 414 shows frequency on a logarithmic scale from 10 Hz to 10 kHz. The unfiltered haptic signal is shown in line 418 and the filtered signal is shown in line 416. The signal energy of the unfiltered haptic signal 418 extends into the frequency region above 2 kHz. The inventors have appreciated that the higher frequencies are not important for driving the ERM but will potentially be reproduced by the audio actuator. To prevent audible artefacts on the audio actuator which may for example be a loudspeaker, the haptic signal is low-pass filtered by the haptic filter 306 before combining it with the audio signal. It can be observed that the signal energy is much lower for frequencies above 2 kHz. As a result, the audio actuator 332, which reproduces the higher frequencies, will be much less polluted by the haptic signal when the haptic signal is low-pass filtered. The inventors have further appreciated that filtering the haptic signal using the haptic filter 306 has a minimal effect on the response of the ERM. By filtering the haptic signal and audio signal and combining the two signals into a single audio-haptic signal, a single amplifier may be used to drive a parallel arrangement of at least one audio actuator and haptic actuator.

In other examples, the haptic actuator 334 may be an LRA for reproducing the haptic part of the combined signal. A typical LRA drive signal has most of its energy around the LRA resonance frequency which may be for example in the region of 170 Hz. The LRA may also, but to a lesser degree, react to higher frequencies by acoustically reproducing these frequencies. In some examples, these higher frequencies for example above 500 Hz may be filtered out by implementing a low-pass filter (not shown) arranged between the output of the amplifier and the input of the haptic actuator 334.

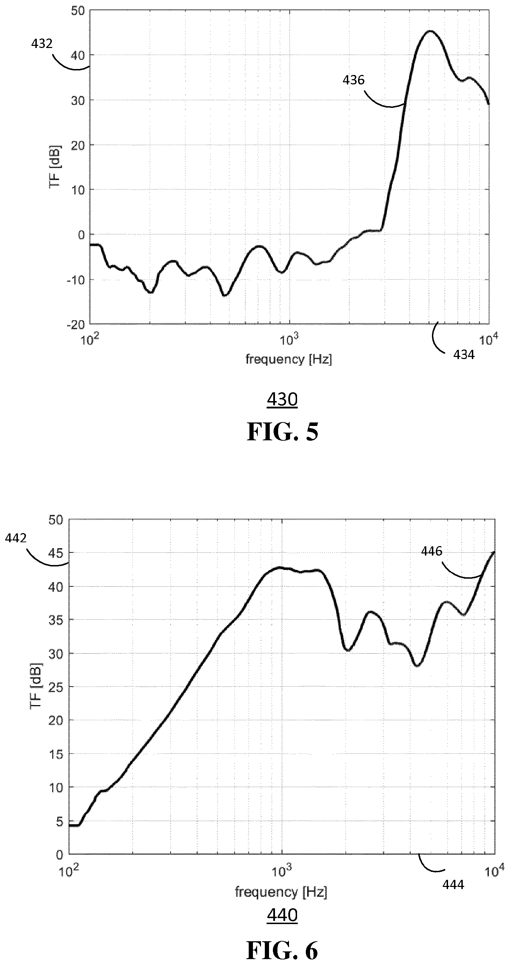

The audio actuator 332 may include a piezo for reproducing the audio part of the combined signal. An example acoustic transfer function 430 (voltage-to-acoustic-pressure) of a piezo is shown in Fig. 5. The y-axis 432 shows power in dB varying from -20 dB to +50 dB. And the x-axis 434 shows frequency on a logarithmic scale from 100 Hz to 10 kHz. The response is shown by line 436. In this example, it can be observed that the piezo element only reproduces frequencies above 3 kHz adequately. The lower frequencies are not audibly reproduced, and consequently lower frequencies may be filtered out without impact on the audio quality. In this example, the audio high-pass filter 308 may have a corner or cut-off frequency of 1 kHz without impacting the acoustic output of the piezo. This may result in more available voltage headroom for the combined signal before amplifier clipping. A resistance or inductance may be typically put in series with the piezo element to limit the peak currents.

In some examples, the audio actuator 332 may be a loudspeaker for reproducing the audio part of the combined signal. An example acoustic transfer function 440 (voltage to acoustic pressure) of a loudspeaker is shown in Fig. 6. The y-axis 442 shows power in dB varying from -20 dB to +50dB. And the x-axis 444 shows frequency on a logarithmic scale from 100 Hz to 10 kHz. The response is shown by line 446. From the resonance frequency of the loudspeaker which is approximately 800 Hz in this example downwards, the audio reproduction decreases with 40 dB per decade. To reduce the audible effect of the haptic component in the combined audio-haptic signal, in some examples a capacitor may be arranged in series to the loudspeaker to implement a high-pass filter such that the frequencies below for example 500 Hz are attenuated. In other examples, more elaborate higher-order filters may be used.

The low-pass haptic filter 306 applied to the haptic signal may reduce the higher-frequency components in the haptic signal. These higher-frequency components only have a very small effect on the excitation of the haptic actuator 334 in terms of acceleration. However, they may generate undesired artefacts on the audio actuator 332.

The high-pass audio filter 308 applied to the audio signal filters out signal components that are not reproduced by the audio actuator. This filter operation may reduce the signal amplitude, leaving more signal headroom that can be used to for example increase the audio signal level without clipping the amplifier. The filter operation may also prevent the haptic actuator from being excited by low frequency audio signal components.

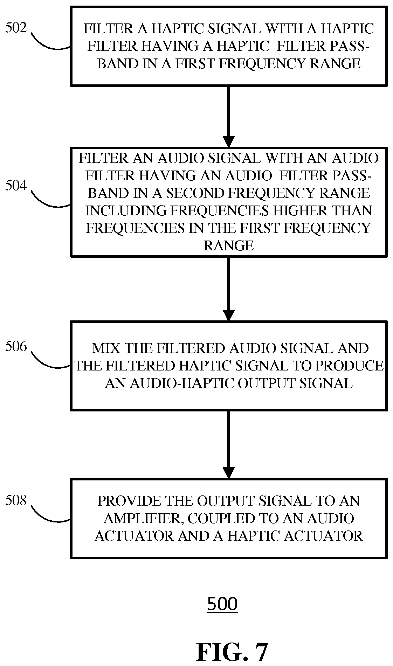

Figure 7 shows a method of audio-haptic signal processing 500. In step 502 a haptic signal is filtered with a haptic filter having a pass-band in a first frequency range. In step 504, an audio signal is filtered with an audio filter having a pass-band in a second frequency range. The second frequency range comprises frequencies higher than frequencies in the first frequency range. In step 506 the filtered audio signal and the filtered haptic signal are mixed to produce an output audio-haptic signal. In step 508, the output audio-haptic signal is J provided to a single amplifier coupled to a parallel arrangement of an audio actuator and a haptic actuator.

An audio-haptic processor and method of audio-haptic processing is described. The audio-haptic processor includes a haptic filter having a haptic filter pass-band in a first frequency range and an audio filter having an audio filter pass-band in a second frequency range. The second frequency range includes some frequencies higher than frequencies in the first frequency range. The audio processor includes a mixer coupled to the audio filter and the haptic filter. The audio-haptic processor receives an audio signal and a haptic signal. The audio signal is filtered by the audio filter and the haptic signal is filtered by the haptic filter. The filtered audio and haptic signals are mixed by the mixer. The resulting audio-haptic output signal output from the mixer may be provided to an amplifier coupled to at least one haptic actuator and one audio actuator.

The audio-haptic processor may be implemented in hardware, software executable on a microprocessor or digital signal processor, or a combination of hardware and software. The audio-haptic processor and methods of audio processing described herein may be included in mobile devices such as mobile phones, wearable devices, laptop computers, computer tablets and portable medical devices.

The audio-haptic processor and audio-haptic system may also be included in any device having an audio actuator and haptic actuator.

In some examples the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Examples of the material discussed in this specification can be implemented in whole or in part through network, computer, or data-based devices and/or services. These may include cloud, internet, intranet, mobile, desktop, processor, look-up table, microcontroller, consumer equipment, infrastructure, or other enabling devices and services.

## Claims

1. An audio-haptic processor 2. (230) comprising:
an audio input (204) configured to receive an audio signal;
a haptic input (202) configured to receive a haptic signal;
an audio-haptic processor output (216) configured to output an audio-haptic output signal;
a haptic filter (206) having a haptic filter pass-band in a first frequency range, a haptic filter input coupled to the haptic input, and a haptic filter 2. output (210);
an audio filter (208) having an audio filter pass-band in a second frequency range and an audio filter input coupled to the audio input, and an audio filter output (212), wherein the second frequency range comprises frequencies higher than frequencies in the first frequency range, and wherein the haptic filter (206) is a low-pass filter and the audio filter (208) is a high pass filter;
a mixer (214) having a first mixer input coupled to the haptic filter output, a second mixer input coupled to the audio filter output and a mixer output coupled to the audio-haptic processor output, wherein the audio-haptic processor output is configured to be coupled to an amplifier (226) coupled to at least one haptic actuator (234) and one audio actuator (232);
a controller (220) having a respective control output coupled to at least one of the haptic filter (206) and the audio filter (208), and a respective input coupled to at least one of the audio input and the haptic input, and wherein the controller (220) is configured to adapt a filter characteristic of at least one of the haptic filter (206) and the audio filter (208) dependent on at least one of an audio signal received on the audio input and a haptic signal received on the haptic input;
wherein the controller (220) is further configured to adapt the filter characteristic of at least one of the haptic filter (206) and the audio filter (208) to maintain the amplitude of the audio-haptic output signal below a predetermined value.

2. The audio-haptic processor of claim 1 wherein the controller (220) has a further control output coupled to the mixer (214) and wherein the controller (220) is further configured to adapt the mixing of the filtered audio signal and the filtered haptic signal dependent on the at least one of the audio signal and the haptic signal.

3. The audio-haptic processor of any of claim 1 or 2, wherein the filter characteristic comprises at least one of the gain and at least one cut-off frequency of the filter.

4. The audio-haptic processor of any preceding claim wherein the cut-off frequency of the low-pass filter is less than the lowest cut-off frequency of the audio filter (208).

5. The audio-haptic processor of any preceding claim wherein the cut-off frequency of the high-pass filter is greater than the highest cut-off frequency of the haptic filter (206).

6. The audio-haptic processor of any preceding claim wherein the haptic filter (206) has a highest cut-off frequency less than 800 Hz and the audio filter (208) has a lowest cut-off frequency greater than 1 kHz.

7. An audio-haptic system (200) comprising the audio-haptic processor of any preceding claim and further comprising the amplifier (226) coupled to the audio-haptic processor output and wherein the amplifier is configured to be connected to a parallel circuit of the audio actuator (232) and the haptic actuator (234).

8. The audio-haptic system of claim 7 and further comprising the audio actuator and the haptic actuator coupled to the amplifier output.

9. The audio-haptic system of claim 8 further comprising at least one of a high-pass filter arranged between the amplifier output and the audio actuator and a low-pass filter arranged between the amplifier output and the haptic actuator.

10. A method of audio-haptic processing in an audio-haptic processor (230) comprising an audio input (204) configured to receive an audio signal, a haptic input (202) configured to receive a haptic signal, an audio-haptic processor output configured to output an audio-haptic signal, a haptic filter (206), an audio filter (208), a mixer (214) and a controller (220), the method of audio-haptic processing comprising:
filtering (502) the haptic signal with the haptic filter having a haptic filter pass-band in a first frequency range;
filtering (504) the audio signal with the audio filter having an audio filter pass band in a second frequency range; wherein the second frequency range comprises frequencies higher than frequencies in the first frequency range, and wherein the haptic filter is a low-pass filter and the audio filter is a high pass filter;
generating (506) an audio-haptic output signal by mixing with the mixer (214) the filtered audio signal and the filtered haptic signal;
providing (508) the audio-haptic output signal to an amplifier (226), wherein the amplifier is coupled to an audio actuator (232) and a haptic actuator (234);
adapting with the controller a filter characteristic of at least one of the haptic filter and the audio filter dependent on at least one of the haptic signal and the audio signal to maintain the amplitude of the audio-haptic output signal below a predetermined value.

11. The method of claim 10 wherein the haptic filter has a highest cut-off frequency less than 800 Hz and the audio filter has a lowest cut-off frequency greater than 1 kHz.

12. A computer program product comprising instructions which, when being executed by a processing unit, cause said processing unit to perform the steps of the method of claim 10.

## Patentansprüche

1. Audio-Haptik-Prozessor (230), der aufweist:
einen Audio-Eingang (204), der dazu ausgebildet ist, ein Audio-Signal zu empfangen;
einen Haptik-Eingang (202), der dazu ausgebildet ist, ein Haptik-Signal zu empfangen;
einen Audio-Haptik-Prozessorausgang (216), der dazu ausgebildet ist, ein Audio-Haptik-Ausgangssignal auszugeben;
ein Haptik-Filter (206) mit einem Haptik-Filter-Durchlassband in einem ersten Frequenzbereich, einem mit dem Haptik-Eingang gekoppelten Haptik-Filter-Eingang und einem Haptik-Filter-Ausgang (210);
ein Audio-Filter (208) mit einem Audio-Filter-Durchlassband in einem zweiten Frequenzbereich und einem mit dem Audio-Eingang gekoppelten Audio-Filter-Eingang und einem Audio-Filter-Ausgang (212),
wobei der zweite Frequenzbereich Frequenzen aufweist, die höher sind als Frequenzen in dem ersten Frequenzbereich, und wobei das Haptik-Filter (206) ein Tiefpassfilter ist und das Audio-Filter (208) ein Hochpassfilter ist;
einen Mischer (214) mit einem mit dem Haptik-Filter-Ausgang gekoppelten ersten Mischer-Eingang, einem mit dem Audio-Filter-Ausgang gekoppelten zweiten Mischer-Eingang, und einem mit dem Audio-Haptik-Prozessorausgang gekoppelten Mischer-Eingang,
wobei der Audio-Haptik-Prozessorausgang dazu ausgebildet ist, mit einem Verstärker (226), der mit zumindest einem Haptik-Aktor (234) und einem Audio-Aktor (232) gekoppelt ist, gekoppelt zu werden; und
einen Controller (220) mit einem jeweiligen Steuer-Ausgang, der mit zumindest einem von dem Haptik-Filter (206) und dem Audio-Filter (208) gekoppelt ist, und einem jeweiligen Eingang, der mit zumindest einem von dem Audio-Eingang und dem Haptik-Eingang gekoppelt ist, und wobei der Controller (220) dazu ausgebildet ist, eine Filtercharakteristik von zumindest einem von dem Haptik-Filter (206) und dem Audio-Filter (208) in Abhängigkeit von zumindest einem eines an dem Audio-Eingang empfangenen Audio-Signals und eines an dem Haptik-Eingang empfangenen Haptik-Signals anzupassen;
wobei der Controller (220) weiterhin dazu ausgebildet ist, die Filtercharakteristik von zumindest einem von dem Haptik-Filter (206) und dem Audio-Filter (208) anzupassen, um die Amplitude des Audio-Haptik-Ausgangssignals unter einem vorgegebenen Wert zu halten.

2. Audio-Haptik-Prozessor nach Anspruch 1, wobei der Controller (220) einen mit dem Mischer (214) gekoppelten, weiteren Steuer-Ausgang aufweist, und wobei der Controller (220) weiterhin dazu ausgebildet ist, das Mischen des gefilterten Audio-Signals und des gefilterten Haptik-Signals in Abhängigkeit von dem zumindest einem von dem Audio-Signal und dem Haptik-Signal anzupassen.

3. Audio-Haptik-Prozessor nach einem der Ansprüche 1 oder 2, wobei die Filtercharakteristik zumindest eine von der Verstärkung und zumindest eine von der Abschneidefrequenz des Filters aufweist.

4. Audio-Haptik-Prozessor nach einem vorhergehenden Anspruch, wobei die Abschneidefrequenz des Tiefpassfilters kleiner ist als die niedrigste Abschneidefrequenz des Audio-Filters (208).

5. Audio-Haptik-Prozessor nach einem vorhergehenden Anspruch, wobei die Abschneidefrequenz des Hochpassfilters größer ist als die höchste Abschneidefrequenz des Haptik-Filters (206).

6. Audio-Haptik-Prozessor nach einem vorhergehenden Anspruch, wobei das Haptik-Filter (206) eine höchste Abschneidefrequenz von weniger als 800 Hz aufweist und das Audio-Filter (208) eine niedrigste Abschneidefrequenz von mehr als 1 kHz aufweist.

7. Audio-Haptik-System (200), das den Audio-Haptik-Prozessor nach einem vorhergehenden Anspruch aufweist und weiterhin den Verstärker (226) mit dem Audio-Haptik-Prozessor-Ausgang gekoppelten aufweist, und wobei der Verstärker dazu ausgebildet ist, mit einer Parallelschaltung des Audio-Aktors (232) und des Haptik-Aktors (234) verbunden zu werden.

8. Audio-Haptik-System nach Anspruch 7, das weiterhin den Audio-Aktor und den Haptik-Aktor, die mit dem Verstärker-Ausgang gekoppelt sind, aufweist.

9. Audio-Haptik-System nach Anspruch 8, das weiterhin zumindest eines von einem Hochpassfilter, das zwischen dem Verstärker-Ausgang und dem Audio-Aktor angeordnet ist, und einem Tiefpassfilter, das zwischen dem Verstärker-Ausgang und dem Haptik-Aktor angeordnet ist, aufweist.

10. Verfahren zur audio-haptischen Verarbeitung in einem Audio-Haptik-Prozessor (230), der einen Audio-Eingang (204), der dazu ausgebildet ist, ein Audio-Signal zu empfangen, einen Haptik-Eingang (202), der dazu ausgebildet ist, ein Haptik-Signal zu empfangen, einen Audio-Haptik-Prozessor-Ausgang, der dazu ausgebildet ist, ein Audio-Haptik-Signal auszugeben, ein Haptik-Filter (206), ein Audio-Filter (208), einen Mischer (214) und einen Controller (220) aufweist, wobei das Verfahren zur audio-haptischen Verarbeitung aufweist:
Filtern (502) des Haptik-Signals mit dem Haptik-Filter, das ein Haptik-Filter-Durchlassband in einem ersten Frequenzbereich aufweist;
Filtern (504) des Audio-Signals mit dem Audio-Filter, das ein Audio-Filter-Durchlassband in einem zweiten Frequenzbereich aufweist; wobei der zweite Frequenzbereich Frequenzen, die höher sind als Frequenzen in dem ersten Frequenzbereich, aufweist und wobei das Haptik-Filter ein Tiefpassfilter ist und das Audio-Filter ein Hochpassfilter ist;
Erzeugen (506) eines Audio-Haptik-Ausgangssignals durch Mischen des gefilterten Audio-Signals und des gefilterten Haptik-Signals mit dem Mischer (214);
Liefern (508) des Audio-Haptik-Ausgangssignals an einen Verstärker (226), wobei der Verstärker mit einem Audio-Aktor (232) und einem Haptik-Aktor (234) gekoppelt ist;
Anpassen einer Filtercharakteristik von zumindest einem von dem Haptik-Filters und dem Audio-Filter in Abhängigkeit von zumindest einem von dem Haptik-Signal und dem Audio-Signal mit dem Controller, um die Amplitude des Audio-Haptik-Ausgangssignals unter einem vorgegebenen Wert zu halten.

11. Verfahren nach Anspruch 10, wobei das Haptik-Filter eine höchste Abschneidefrequenz von weniger als 800 Hz aufweist und das Audio-Filter eine niedrigste Abschneidefrequenz von mehr als 1 kHz aufweist.

12. Computerprogrammprodukt, das Anweisungen aufweist, die, wenn sie durch eine verarbeitende Einheit ausgeführt werden, die verarbeitende Einheit veranlassen, die Schritte des Verfahrens nach Anspruch 10 durchzuführen.

## Revendications

1. Processeur audio-haptique (230) comprenant :
une entrée audio (204) configurée pour recevoir un signal audio ;
une entrée haptique (202) configurée pour recevoir un signal haptique ;
une sortie de processeur audio-haptique (216) configurée pour faire sortir un signal de sortie audio-haptique ;
un filtre haptique (206) ayant une bande passante de filtre haptique dans une première bande de fréquences, une entrée de filtre haptique couplée à l'entrée haptique, et une sortie de filtre haptique (210) ;
un filtre audio (208) ayant une bande passante de filtre audio dans une seconde bande de fréquences et une entrée de filtre audio couplée à l'entrée audio, et une sortie de filtre audio (212),
dans lequel la seconde bande de fréquences comprend des fréquences plus hautes que des fréquences dans la première bande de fréquences,
et dans lequel le filtre haptique (206) est un filtre passe-bas et le filtre audio (208) est un filtre passe-haut ;
un mélangeur (214) ayant une première entrée de mélangeur couplée à la sortie de filtre haptique, une seconde entrée de mélangeur couplée à la sortie de filtre audio et une sortie de mélangeur couplée à la sortie de processeur audio-haptique,
dans lequel la sortie de processeur audio-haptique est configurée pour être couplée à un amplificateur (226) couplé à au moins un actionneur haptique (234) et un actionneur audio (232) ; et
un dispositif de commande (220) ayant une sortie de commande respective couplée à au moins un parmi le filtre haptique (206) et le filtre audio (208), et une entrée respective couplée à au moins une parmi l'entrée audio et l'entrée haptique, et dans lequel le dispositif de commande (220) est configuré pour adapter une caractéristique de filtre d'au moins un parmi le filtre haptique (206) et le filtre audio (208) en fonction d'au moins un parmi un signal audio reçu sur l'entrée audio et un signal haptique reçu sur l'entrée haptique ;
dans lequel le dispositif de commande (220) est en outre configuré pour adapter la caractéristique de filtre d'au moins un parmi le filtre haptique (206) et le filtre audio (208) pour maintenir l'amplitude du signal de sortie audio-haptique en dessous d'une valeur prédéterminée.

2. Processeur audio-haptique selon la revendication 1 dans lequel le dispositif de commande (220) a une autre sortie de commande couplée au mélangeur (214) et dans lequel le dispositif de commande (220) est en outre configuré pour adapter le mélange du signal audio filtré et du signal haptique filtré en fonction de l'au moins un parmi le signal audio et le signal haptique.

3. Processeur audio-haptique selon l'une quelconque des revendications 1 ou 2, dans lequel la caractéristique de filtre comprend au moins un parmi le gain et au moins une fréquence de coupure du filtre.

4. Processeur audio-haptique selon l'une quelconque des revendications précédentes dans lequel la fréquence de coupure du filtre passe-bas est inférieure à la fréquence de coupure la plus basse du filtre audio (208).

5. Processeur audio-haptique selon l'une quelconque des revendications précédentes dans lequel la fréquence de coupure du filtre passe-haut est supérieure à la fréquence de coupure la plus haute du filtre haptique (206).

6. Processeur audio-haptique selon l'une quelconque des revendications précédentes dans lequel le filtre haptique (206) a une fréquence de coupure la plus haute inférieure à 800 Hz et le filtre audio (208) a une fréquence de coupure la plus basse supérieure à 1 kHz.

7. Système audio-haptique (200) comprenant le processeur audio-haptique selon l'une quelconque des revendications précédentes et comprenant en outre l'amplificateur (226) couplé à la sortie de processeur audio-haptique et dans lequel l'amplificateur est configuré pour être connecté à un circuit parallèle de l'actionneur audio (232) et de l'actionneur haptique (234).

8. Système audio-haptique selon la revendication 7 et comprenant en outre l'actionneur audio et l'actionneur haptique couplés à la sortie d'amplificateur.

9. Système audio-haptique selon la revendication 8 comprenant en outre au moins un parmi un filtre passe-haut agencé entre la sortie d'amplificateur et l'actionneur audio et un filtre passe-bas agencé entre la sortie d'amplificateur et l'actionneur haptique.

10. Procédé de traitement audio-haptique dans un processeur audio-haptique (230) comprenant une entrée audio (204) configurée pour recevoir un signal audio, une entrée haptique (202) configurée pour recevoir un signal haptique, une sortie de processeur audio-haptique configurée pour faire sortir un signal audio-haptique, un filtre haptique (206), un filtre audio (208), un mélangeur (214) et un dispositif de commande (220), le procédé de traitement audio-haptique comprenant :
le filtrage (502) du signal haptique avec le filtre haptique ayant une bande passante de filtre haptique dans une première bande de fréquences ;
le filtrage (504) du signal audio avec le filtre audio ayant une bande passante de filtre audio dans une seconde bande de fréquences ; dans laquelle la seconde bande de fréquences comprend des fréquences plus hautes que des fréquences dans la première bande de fréquences, et dans laquelle le filtre haptique est un filtre passe-bas et le filtre audio est un filtre passe-haut ;
la génération (506) d'un signal de sortie audio-haptique en mélangeant avec le mélangeur (214) le signal audio filtré et le signal haptique filtré ;
la fourniture (508) du signal de sortie audio-haptique à un amplificateur (226),
dans laquelle l'amplificateur est couplé à un actionneur audio (232) et un actionneur haptique (234) ;
l'adaptation avec le dispositif de commande d'une caractéristique de filtre d'au moins un parmi le filtre haptique et le filtre audio en fonction d'au moins un parmi le signal haptique et le signal audio pour maintenir l'amplitude du signal de sortie audio-haptique en dessous d'une valeur prédéterminée.

11. Procédé selon la revendication 10 dans laquelle le filtre haptique a une fréquence de coupure la plus haute inférieure à 800 Hz et le filtre audio a une fréquence de coupure la plus basse supérieure à 1 kHz.

12. Produit programme d'ordinateur comprenant des instructions qui, lorsqu'elles sont exécutées par une unité de traitement, amènent ladite unité de traitement à réaliser les étapes du procédé selon la revendication 10.
